# EUROPEAN PATENT APPLICATION

(11) **EP 1 792 878 A1**
(43) Date of publication of application: **06.06.2007**
(21) Application number: 06386036.5
(22) Date of filing: 21.11.2006
(51) Int. Cl.: C02F 11/14

(54) **Method and system for ecological sludge treatment and packaging**

(30) Priority: 05.12.2005 GR 2005100594
(71) Applicant: Soukos Robots S.A., Larissa/Thessaloniki (GR)
(72) Inventor: Soukos, Konstantinos, 41222 Larissa (GR)

(57) **Abstract**

This invention refers to a method and a system for ecological sludge treatment and packaging, utilized to produce organic chemical fertilizers, soil improvers, fuel and other useful products, with sludge as raw material which is mixed with various complementary chemical and/or non chemical substances. Sludge products are properly packed in special packaging pockets.

Packaging is appropriate for easy transfer and long-term storage of the sludge product, without running the risk of product leakage and unpleasant odour/gas release into the environment, so as to maximally protect public health.

The system consists of at least one sludge collection device (1), at least one complementary substance storage device (3), at least one sludge treatment mechanism (6), at least one gas, vapour and/or odour filter and deodorisation mechanism (8), at least one sludge end-product packaging mechanism (10), and at least one heat production unit (7).

## Description

This invention refers to a method and a system for ecological sludge treatment and packaging. The end-product of the treated sludge is appropriate to be used either as soil improver and/or organic chemical fertilizer or as complementary material to produce various products or as fuel or for non-specialized use. The packed material produced with this method is appropriate to be stored for a long time period, without creating unpleasant odours and thus protecting public health, and without constituting a concentration area for birds, animals and various organisms.

Sludge is the outcome of (urban, industrial etc.) sewage treatment. In particular, it is the remainder (mainly solid with high humidity rates up to 85%) produced during primary (physical and/or chemical) and secondary (biological treatment) treatment. This product contains a large number of valuable ingredients: nutrients, organic matter etc. It also has high heating value which makes it appropriate for a large range of uses. On the other hand, sludge carries unpleasant pollutants (heavy metals, synthetic organics, pathogens etc.), a fact that makes the need for a direct and mainly environment friendly managing thereof imperative.

Over the past years sewage treatment plants have been built worldwide aiming at environmental protection and relevant law observance so that an uncontrollable disposal thereof will not take place.

The quantities of sludge produced worldwide are ever increasing. The factors crucial for the manner of managing thereof are the characterization thereof as hazardous or non hazardous waste, the suitability thereof for sanitary land filling, sludge usage in agriculture, the use thereof as a fuel etc. In any case, manners of waste management should tend to be financially exploited on the condition that environmental protection and public health are ensured. Nowadays the manners of management implemented are recycling, calcination through energy recovery and sanitary land filling of sludge under various forms.

According to the above, sludge recycling is hierarchically preferable overall the other treatment methods. Sludge treatment and transformation into a soil improving material is the only existing method of recycling thereof. Soil improving materials depending on the qualitative characteristics thereof and mainly on their content in heavy metals have various uses (agriculture, floriculture, recoveries, biofilters etc.). Greece currently imports large quantities of soil-improving materials that have partially replaced chemical fertilizers. In this manner of disposing of sludge in soil, after appropriate treatment, the management of the largest part of sludge produced takes place at an international level.

Sludge treatment and transformation into a soil-improving material is a method applied only to a specific type of sludge and never to sludge from urban waste, because the latter contains extremely hazardous elements (heavy metals), which are not deconstructed. In addition intense odours are created by the aerobic - semi-anaerobic sludge fermentation and poisonous gases are released and diffused in the atmosphere, which are very harmful to health.
More than one hazard emerges from sludge treatment and transformation into a soil-improving material. In case of intense precipitation, the following will take place: part of the rain water, going through sludge, will end up in underground waters and pollute them, whereas another part of the rain water will wash away sludge and end up in the soil along with heavy metals. Soil and watertable pollution is continued in the precipitation to come.

Sludge heat treatments (combustion) are an alternative option when recycling is not possible. In many EU countries, sludge is burnt in incinerators fully equipped with auxiliary devices and special filters so that exhausts are cleaned before released into the atmosphere and volatile ash is not generated since it is toxic waste. Finally, they have specially formed and secure areas for the transfer and storage of unwanted combustion residues that constitute environmental pollutants. In many countries and states, industries do not have that equipment due to high installation and operation costs thereof. Therefore, this solution is impossible and complicated.

In respect of sludge disposal in landfill sites, which have been the main way of disposing of sludge so far, it should be pinpointed that landfill regulations and terms of use become more and more strict. In many cases, landfill sites are not enough to accommodate the ever increasing sludge quantities. International and European regulations force member states to reduce these quantities so as to partially solve the problem. However this is very hard to be accomplished.

Another way of managing sludge is drying. Sometimes it is proposed as a permanent and final solution to the problem, erroneously though, since it does not solve the current problem. In fact, drying, that is a reduction in humidity (water) included in sludge from 85% to 25% approximately, limits the daily quantity of sludge produced. It is obvious that this method does not solve the problem of final sludge disposal; it only reduces its volume.

This invention is aimed at creating a method and a system which are able to provide a direct solution to the aforementioned current problems.
The purpose of this invention is to report a method with which even large quantities of sludge can be fully transformed into various useful products (hereafter 'sludge products') in an environment friendly manner, without the uncontrolled release of by-products and/or reaction products into the environment, while providing the possibility of packing such products in an eco-friendly manner.

In particular, it is aimed at presenting a method of ecological sludge exploitation and packaging, and an appropriate system for implementing such method, so as to achieve the following:
a) direct and secure packing of sludge products, so that transfer from the production site and storage thereof in open-air areas become easy without necessitating special protected areas and storage facilities. Packaging takes place in a manner that does not generate unpleasant conditions (e.g. unpleasant odours) and effects on the environment.
b) transforming sludge into a perfect soil-improving material and/or organic chemical fertilizer. This is achieved by adding to the sludge specific low cost chemical and/or non chemical substances, so that after packing the end-mixture those substances will realise fermentations within the specially made plastic packaging pockets (bags). Maintaining the end-product within the packaging pockets after the time period required for fermentations to take place results in producing a useful material with important nutritional value, appropriate to be disposed of in soil, for instance through agriculture.
c) Transforming sludge into high heating value material (fuel). The sludge product after being long-term stored in the abovementioned packaging pockets is appropriate to be used as fuel too. Packaging pockets have a safety valve for the filling thereof. In the opening of the safety valve there is preferably a special filter system, which is at least a special cotton filter that helps the filtering of fermentation gases before their exit, the exit of humidity and the entry of oxygen into the pocket. After the treated sludge is long-term packed under suitable compression conditions, a material appropriate to be used as a fuel is produced.

According to this invention, sludge treatment and then packaging in special packaging pockets are accomplished with the use of sludge as raw material, and processes take place without generating solid - liquid by-products, hazardous or not, and without releasing hazardous exhaust gases into the environment.

The end-products of treated sludge are then directed to packaging into packaging pockets (bags), without releasing unpleasant odours and hazardous gases into the atmosphere and without the possibility of material leakage. All these are accomplished with a special filter system and a safety valve found in the packaging pockets, which allow for the safe creation of fermentations, gradual product dehumidification, and the filtering of outgoing fermentation gases.

According to this invention, sludge, after being chemically or not treated, and packed, is transformed into a material which is stored and transferred in an easy manner. The entire system operation is accomplished based on the concept of ensuring public sanitation and environmental protection. For that reason, it is important to have the ability to design a system that will treat and pack such materials in an eco-friendly manner, be easy to operate and have low construction and operation costs.

To implement the method of ecological sludge treatment and packaging, according to this invention, a system (assembly) is required which preferably consists of at least one sludge collection device, at least one complementary chemical and/or non chemical substance storage device equipped with at least one dose meter, at least one preferably round- or cone-shaped sludge treatment mechanism without, however, excluding any other shape, at least one gas, vapour and/or unpleasant odour filter and deodorisation mechanism, at least one sludge end-product packaging mechanism, and at least one heat production unit. The entire abovementioned system (assembly) is preferably mounted on an appropriate mounting base.

Based on the above, it can be easily concluded that it is about a system that bears all the equipment required so that it can operate as an integrated sludge treatment and packaging assembly. The system, according to this invention, operates as an automated sludge treatment unit, which conducts the transformation of sludge into useful material. In particular, sludge products are appropriate to be used as either organic chemical fertilizers and soil improvers and/or complementary materials to produce various products or fuel or for any other purpose or alternatively for the production of solid and/or semi-solid mass appropriate for long-term packaging.

With this invention, sludge mass is possible to be transformed into a solid and/or semi-solid material in an easy and fast manner after mixing thereof with complementary materials, either chemical substances or inert material, and then packed directly into appropriate packaging pockets (bags) for long-term storage, without running the risk of unpleasant odour, material and hazardous gas release. In this manner, the environment is not burdened and a new manner of sludge management is created. In addition, the system of this invention ensures sludge product packaging in an environment friendly manner, because it accomplishes a complete sealing thereof within a highly strong packaging pocket (bag) appropriate for long-term storage.

The purpose of this invention is for all the abovementioned to be achieved in an eco-friendly manner safe for humans, so that the invention constitutes an acceptable manner of managing such waste and can be used by any service interested in it.

A system for ecological sludge treatment and packaging, according to this invention, holds many advantages.
Provided that the abovementioned system does not require complicated mechanisms and devices for its construction, it constitutes an integrated assembly simple to construct, which can be designed for similar multiple capacity systems. The system configuration and design, as well as the arrangement of the constituent subsystems do not require a specialized installation area.
The method used, according to this invention, does not employ hazardous and toxic substances for sludge treatment and therefore is environment friendly.
The only complementary materials used, according to this method, for transforming sludge into useful products are low cost and environment friendly chemical or non chemical substances, a fact that constitutes this method particularly economical and easily applicable.

Provided that sludge treatment and packaging in special packaging pockets, according to this invention, are accomplished with fully transforming its initial mass into useful products, without generating solid and liquid by-products and without releasing gases into the environment, the operation of this invention can be characterized environment friendly.

The entire system, according to this invention, is constructed in a manner that is totally air-tight.

According to the abovementioned, this invention can be characterized secure in operation for system operators.

Provided that the operation of this invention is constant, full system automization is accomplished without requiring staff intervening in various treatment and packaging stages, thus providing full safety and hygiene to employees in this sector. The constant operation in a controlled and safe manner increases the performance of such a system.

The construction and manner of operation of this invention will be more comprehensible from the following description and with the help of attached designs, which are:
Figure 1 illustrates a perspective view of the system, according to this invention, with four complementary chemical and/or non chemical substance storage devices (3), which are connected, for instance, to a straight screw conveyor (2).
Figure 2 illustrates a top view of the system of this invention, according to figure 1.
Figure 3 illustrates lateral view A of the system of this invention, according to figure 1.
Figure 4 illustrates lateral view B of the system of this invention, according to figure 1.
Figure 5 illustrates a flow chart, according to this invention.

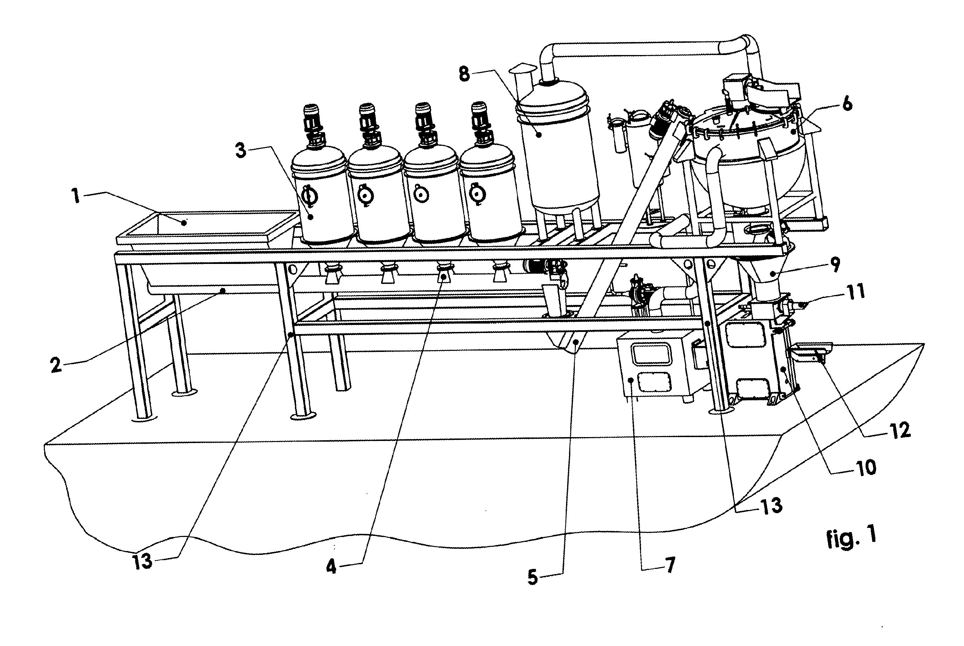

With detailed reference to figure 1, sludge is concentrated in one multiple capacity collection device (1). The device (1) referred to has an appropriate shape, so that the bottom thereof can be connected directly to a controlled distribution device (2). Device (2) preferably consists of at least one airtight sludge transfer device and/or a sludge pre-mix mechanism.

The premix mechanism consists of at least one premix-type screw conveyor whose one side connects to a collection device (1) and whose other side connects to at least one treatment mechanism (6).

The screw conveyor used has appropriate length and capacity, so as to transfer sludge to at least one treatment mechanism (6). It has at least one feed slot to be connected to at least one dose meter (4) to accommodate feeding with complementary substances.

The controlled distribution device (2) is aimed at collecting the sludge accumulated in the collection device (1) and transferring it preferably to at least one treatment mechanism (6).

The system, according to this invention, has at least one complementary chemical and/or non chemical substance storage device (3), preferably of cylindrical form and variable capacity.

In addition, the system of this invention includes preferably at least one sludge treatment mechanism (6), at least one gas, vapour and/or odour filter and deodorisation mechanism (8), at least one sludge end-product packaging mechanism (10), and at least one heat production unit (7).

As illustrated in figure 5 (see single dotted lines), according to this invention, at least one collection device (1) is connected to either at least one controlled distribution device (2) or at least one treatment mechanism (6).

Preferably, at least one treatment mechanism (6) is connected to a filter and deodorization mechanism (8), and at least one sludge end-product packaging mechanism (10).

As illustrated in figure 5 (see double dotted lines), preferably at least one chemical or non chemical substance storage device (3) is connected to either at least one collection device (1) or at least one treatment mechanism (6) or at least one controlled distribution device (2).

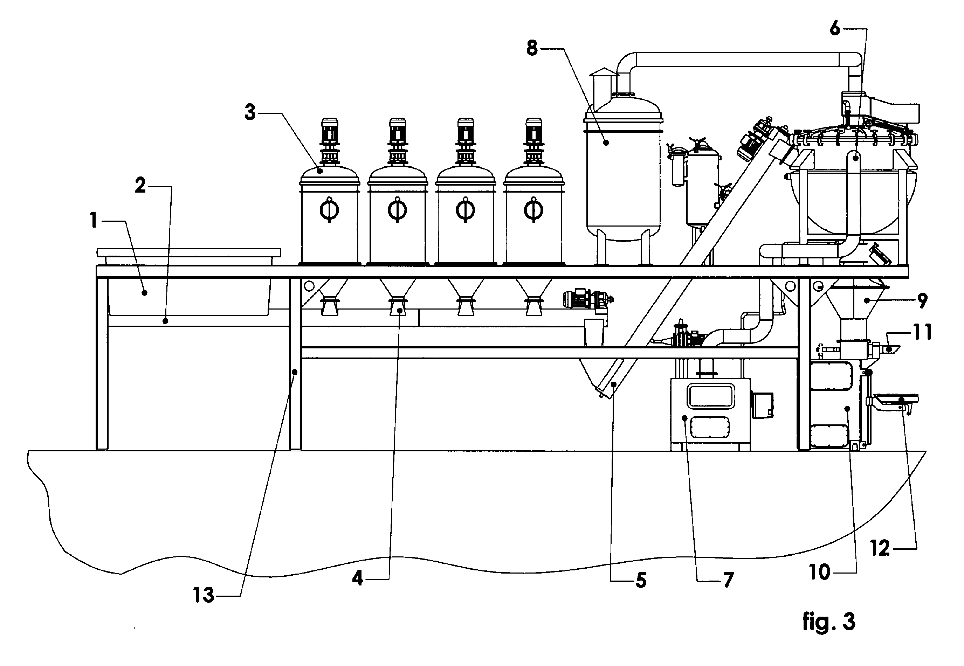

As illustrated in figure 3, the device (3) has preferably on its lower part at least one dose meter (4) to accomplish the controlled feeding of the device connected to the dose meter with chemical and/or non chemical substances.

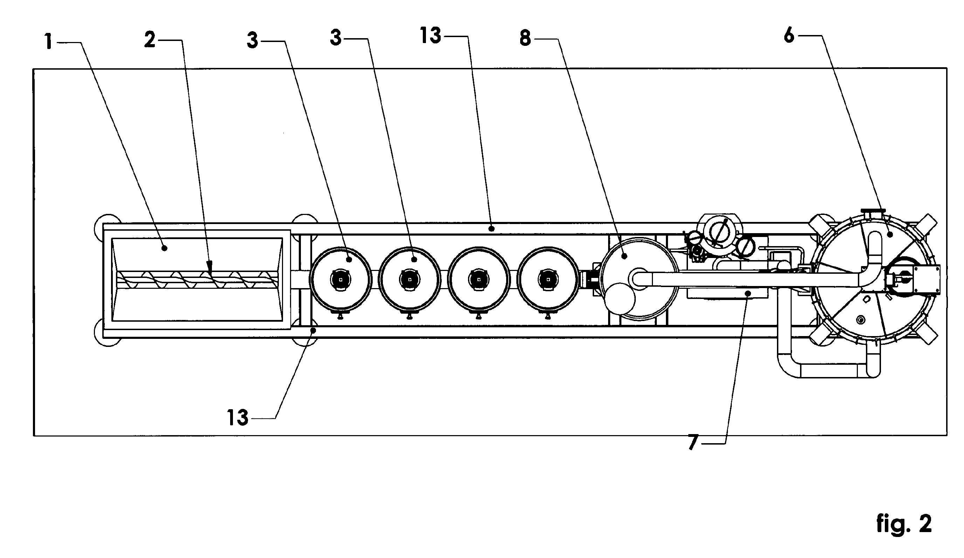

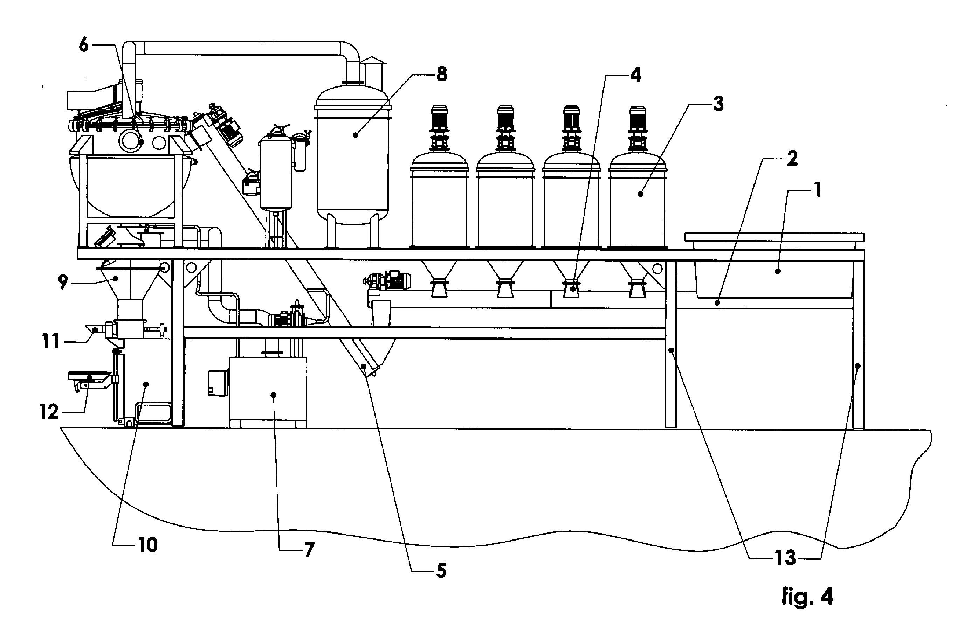

In figures 1, 2, 3 and 4 the system of this invention in a potential form is illustrated. In those figures, the controlled distribution device (2) is a premix-type screw conveyor whose one side connects to a collection device (1) and whose other side connects to one treatment mechanism (6). In these figures, the screw conveyor consists, for instance, of a straight and an inclined part (5). In addition, it is illustrated with a connection of four chemical and/or non chemical substance storage devices (3) to a straight screw conveyor (2).

The screw consists of horizontal and/or inclined parts (5) which can have various dimensions and capacities.

It is noted that sludge premixing is continued also during its passage through the inclined screw conveyor (5).

When at least one controlled distribution device (2) is used for the system of this invention, that device accomplishes the airtight sludge transfer from a collection device (1) to at least one treatment mechanism (6), and/or sludge premixing with complementary substances during the stage of transfer to the treatment mechanism (6).

In the output of the inclined screw conveyor (5) there is a material extraction slot of appropriate size and shape, so that it can adjoin exactly the input slot found in the treatment mechanism (6).

Then, the sludge, either mixed with complementary substances or not, is transferred to at least one (1) treatment mechanism (6).

The treatment mechanism (6) is necessary for the chemical and/or heat treatment of sludge. Preferably, it consists of at least one treatment chamber, at least one sludge product output adjustment system and at least one stirring device. The treatment chamber can include at least one heating and/or dehumidification system.

The treatment chamber is preferably vertical with a round or cone configuration without, however, excluding any other configuration.

The stirring device in the treatment chamber is necessary for the full stirring of the substances added (raw material, complementary substances) until a satisfactory level of homogeneity is achieved.

At least one heat production unit (7) is connected to the heating and/or dehumidification system in the treatment chamber.

Preferably, the treatment chamber can simultaneously mix, heat and/or dehumidify the sludge mixture to be treated.

The treatment mechanism (6) has on its upper part an appropriate output to be connected to at least one (1) gas filter and deodorization mechanism (8). In this mechanism (8), cleaning and deodorizing unpleasant odours, hazardous gases and/or vapours generated by the treatment and mix process take place.

The filter and deodorization mechanism (8) has preferably on its upper part a smoke stack output for the filtered clean air to exit.

The treated sludge mixture (sludge product) generated in the treatment mechanism (6) is then directed to at least one sludge end-product packaging mechanism (10).

Preferably, the packaging mechanism (10) consists of at least one packaging apparatus which includes at least one special mixer-feeder (9), a filling nozzle (11) and a vibrating mounting base (12) of the packaging pocket.

Preferably, the special mixer-feeder (9) includes at least one compression mechanism for the sludge product to be packed. For instance, a compression mechanism can be a pump appropriate to compress the sludge product before packaging. Compression is aimed at reducing the volume of the sludge product and degasifying thereof, so that the pressures and temperatures required are created within the pocket.

The filling nozzle (11) has an appropriate shape and dimensions, so that the sludge product is easily and quickly packed, without leakage, into appropriate package means, and in particular specially constructed packaging pockets (bags).

It should be noted that the sludge product is transferred preferably to special packaging pockets, keeping the temperature and pressure created by the compression thereof.

Appropriate package means, according to this invention, are special packaging pockets made of highly airtight, penetration-, cut-, pressure-, fall-, impact- and adverse weather conditions- resistant plastic. Preferably, the special packaging pockets are rectangular or oval in shape.

The special packaging pockets have a safety valve and optionally a special filter system. The pockets used guarantee product storage in the created pressure and temperature, so that the appropriate fermentations can take place. After the time required for the completion of fermentation within the pocket, a perfect organic chemical fertilizer and/or soil improver or material appropriate for the production of organic chemical fertilizer and/or soil improver are produced.

The safety valve has appropriate dimensions so that the filling nozzle (11) can enter through it and accomplish a secure filling of the packaging pocket without running the risk of material and gas leakage.

The special filter system consists of at least one special cotton filter placed preferably in a suitable spot on the safety valve.

A vibrating mounting base (12) keeps the pocket in a particular position and causes a smooth constant vibration of the pocket. In that manner, the incoming mass is evenly allocated inside the pocket so as to be properly filled.

This invention has also at least one heat production unit (7). This unit includes at least one oil boiler or at least one electric heating device or at least one fuel input device and/or a heat-exchanger. Unit (7) is connected to the heating and/or dehumidification system of the treatment mechanism (6), so that the latter acquires the temperature required for the operation thereof. The heat production unit (7) can employ part of the treated sludge produced (sludge product) as fuel.

The purpose of this invention is also to record a method of sludge management, with which the careful and environmentally acceptable management thereof is possible, along with the exploitation thereof to the utmost extent.

According to this invention, there are at least 3 possible sludge treatment methods. In these methods, the stages of collection, premix, addition of chemical and/or non chemical substances, treatment, heating and packaging take place in a similar manner, as described above, and for that reason are not repeated in the following descriptions.

Three methods are described further down, with reference to their main differences which are:

According to the first method, sludge is transformed to either an organic chemical fertilizer and/or soil improver, or a material appropriate for the production of organic chemical fertilizers and/or soil improvers. This is accomplished by inserting sludge into at least one treatment mechanism (6), where at least the mixing, and/or addition of complementary chemical and/or non chemical substances, and/or sludge heating under controlled conditions take place. The mixture preferably undergoes constant stirring for a specific time period while being able to be heated selectively.

Complementary chemical substances appropriate to be added during the sludge treatment stage in a specific ratio are potassium, phosphorus, urea and marble powder. These substances are added to sludge either individually or mixed together.

Appropriate non chemical substances are at least low cost inert material of high heating value which include at least wood shavings of any granulation, preferably 0.2-30 mm.

Those substances are added to sludge in appropriate ratios so that the output produced has the desired qualities.

According to the second method, sludge is mixed at least with a specific quantity of marble powder, so that a solid or semi-solid mass appropriate for various uses is produced. With this method, the abovementioned other complementary chemical substances are not added.

According to the third method, to the treatment mechanism (6) inert materials along with sludge are added. For instance, appropriate materials are low cost materials with high heating value, such as at least wood shavings of any granulation, preferably 0.2-30 mm After constant stirring, sludge is transformed into a solid mass ready to be packed and stored. Maintaining the mixture in special packaging pockets, as reported above, and the gradual dehumidification thereof while being packed generate a product suitable for fuel with high heating value.

The sludge product generated by the abovementioned methods is directed to be packed to either various package means or special packaging pockets (bags). Every special packaging pocket has a plastic safety valve and optionally a special filter system.
Those pockets are made of highly penetration-, cut-, pressure-, fall-, impact-and adverse weather conditions- resistant plastic. Those pockets are highly airtight without running the risk of material leakage.

The safety valve allows for the easy entry of the nozzle (11) inside the pocket so as to realise filling. After the pocket being filled, the safety valve blocks the outward leakage of the material found inside the pocket and further achieves the sealing thereof.

In a suitable spot on the safety valve, the special packaging pocket has preferably a special filter system that is at least a special cotton filter. The special filter system allows humidity to exit and/or the generated fermentation gases to be filtered before their exit from the special pocket and/or the entry of oxygen into the pocket. With the exit of gases generated by the fermentation process, non explosion of the pocket due to gas accumulation is guaranteed.
Filtering of the gases generated before their exit from the pocket is desirable for the protection of the environment. In addition, the technical and physical characteristics of the special filter do not allow unpleasant odours to be released into the atmosphere.

This system for ecological sludge treatment and packaging can be designed and tailored for a range of various production capacities, so as to accommodate any needs of the end-user.

The entire equipment and the devices and mechanisms comprising this system are constructed in such a manner so as to be perfectly airtight, without running the risk of material, hazardous gas and unpleasant odour leakage into the environment.

This invention provides a method and a system for ecological sludge treatment and packaging that can used to recycle and exploit sludge through easy processes, ensuring the safety of operators and environmentally acceptable conditions, during both sludge treatment and packaging.

## Claims

1. A system for ecological sludge treatment and packaging which consists of at least one sludge collection device (1), at least one complementary chemical and/or non chemical substance storage device (3) equipped with at least one dose meter (4), at least one sludge treatment mechanism (6), at least one gas, vapour and/or odour filter and deodorisation mechanism (8), at least one sludge end-product packaging mechanism (10), and at least one heat production unit (7).
The system for ecological sludge treatment and packaging is **characterised by** at least one collection device (1) connected to either at least one controlled distribution device (2) or at least one treatment mechanism (6); at least one treatment mechanism (6) connected to at least one filter and deodorization mechanism (8) and at least one sludge end-product packaging mechanism (10); a chemical or non chemical substance storage device (3) connected to either at least one collection device (1) or at least one treatment mechanism (6) or at least one controlled distribution device (2).

2. The system for ecological sludge treatment and packaging, according to claim 1, is **characterized by** a controlled distribution device (2) consisting of at least one airtight sludge transfer device and/or a sludge pre-mix mechanism.

3. The system for ecological sludge treatment and packaging, according to claim 2, is **characterized by** a premix mechanism consisting of at least one premix-type screw conveyor whose one side connects to a collection device (1) and whose other side connects to at least one treatment mechanism (6).

4. The system for ecological sludge treatment and packaging, according to claim 3, is **characterized by** a premix-type screw conveyor consisting of horizontal and/or inclined parts of potentially various sizes and capacities; and appropriate feed ports to be connected to at least one storage device (3).

5. The system for ecological sludge treatment and packaging, according to claim 1, is **characterized by** a treatment mechanism (6) consisting of at least one treatment chamber, at least one sludge product output adjustment system and at least one stirring device.

6. The system for ecological sludge treatment and packaging, according to claim 5, is **characterized by** a treatment chamber including at least one heating and/or dehumidification system.

7. The system for ecological sludge treatment and packaging, according to claim 1, is **characterized by** a sludge end-product packaging mechanism (10) consisting of at least a packaging apparatus which includes at least one special mixer-feeder (9), a filling nozzle (11) and a vibrating mounting base (12).

8. The system for ecological sludge treatment and packaging, according to claim 7, is **characterized by** a special mixer-feeder (9) including at least one compression mechanism for the sludge product to be packed.

9. The system for ecological sludge treatment and packaging, according to claim 7, is **characterized by** a packaging mechanism (10) packing the sludge product in special packaging pockets made of highly airtight, penetration-, cut-, pressure-, fall-, impact- and adverse weather conditions-resistant plastic. These pockets have a safety valve.

10. The system for ecological sludge treatment and packaging, according to claim 9, is **characterized by** special packaging pockets having a square or oval shape.

11. The system for ecological sludge treatment and packaging, according to claims 9 and 10, is **characterized by** a special packaging pocket having a special filter system.

12. The system for ecological sludge treatment and packaging, according to claim 11, is **characterized by** a safety valve with appropriate dimensions so that the filling nozzle (11) can enter through it and accomplish a secure filling of the packaging pocket without running the risk of material and gas leakage.

13. The system for ecological sludge treatment and packaging, according to claim 11, is **characterized by** a special filter system that is at least a special cotton filter placed in a suitable spot on the safety valve of the special packaging pocket.

14. The system for ecological sludge treatment and packaging, according to claim 1, is **characterized by** a heat production unit (7) that contains at least one oil boiler or at least one electric heating device or at least one fuel input device and/or a heat-exchanger, and is connected to the heating and/or dehumidification system of the treatment mechanism (6).

15. The system for ecological sludge treatment and packaging, according to claims 1 to 14, is **characterized by** the fact that the entire equipment and the devices and mechanisms comprising this system are constructed in such a manner so as to be perfectly airtight, without running the risk of material, hazardous gas and unpleasant odour leakage into the environment.

16. A method of ecological sludge treatment and packaging, **characterised by** the following treatment stages:
a) Sludge is transferred through an appropriate distribution device to a treatment mechanism, where at least the mixing and/or addition of complementary chemical and/or non chemical substances, and/or sludge heating under controlled conditions take place.
b) The hazardous or not gases and/or vapours and/or odours generated during the sludge treatment process are directed to a filter and deodorisation mechanism so as for pollutants to be removed before gases, vapours and odours are released into the atmosphere.
c) The sludge output produced during the treatment process is then directed to either an additional treatment thereof or the packaging mechanism.
d) In the packaging mechanism, the sludge product, either compressed or not, is directed to be packed to either various package means or special packaging pockets (bags).
e) The special packaging pockets used are made of highly airtight, penetration-, cut-, pressure-, fall-, impact- and adverse weather conditions-resistant plastic. They have a safety valve and/or a special filter system.
f) Packing in the special packaging pockets takes place through at least one appropriate filling nozzle placed in the packaging mechanism. The nozzle enters the safety valve to securely fill the pocket. Packaging takes place in such a manner that the sludge product packed can retain the developing conditions, temperatures and pressures within the pocket.

17. The method of ecological sludge treatment and packaging, according to claim 16, is **characterised by** that at least potassium, phosphorus, urea and marble powder are suitable as complementary chemical substances appropriate to be added during the sludge treatment stage in a specific ratio, either individually or mixed together; and that appropriate non chemical substances are at least low cost inert material of high heating value, which include at least wood shavings of any granulation.

18. The method of ecological sludge treatment and packaging, according to claims 16 and 17, is **characterised by** the fact that depending on the chemical and/or non chemical substances added during the sludge treatment stage, the output produced is appropriate at least as:
A) An organic chemical fertilizer and/or soil improver after the addition of chemical or non chemical substances in a specific ratio
B) Multipurpose material with the addition of at least specific quantity of marble powder to sludge, so that solid or semi-solid mass is produced.
C) High heating value fuel with the addition of inert material, so that solid mass is produced ready to be stored and/or packed. Maintaining the mixture in special packaging pockets bearing a safety valve and a special cotton filter realises the gradual dehumidification thereof after being packed for some period of time, so as to be suitable as fuel.

19. The method of ecological sludge treatment and packaging, according to claims 17, 18 and 19, is **characterised by** sludge product packaging taking place in special packaging pockets, that have at least one special filter system being at least a cotton filter properly constructed so as to allow humidity to exit and/or the generated fermentation gases to be filtered before their exit from the special pocket and/or the entry of oxygen into the pocket.

20. The method and system for ecological sludge treatment and packaging are **characterised by** their use for the production of at least organic chemical fertilisers, soil improvers, fuel and various products with sludge as raw material which is mixed with various complementary chemical and/or non chemical substances. Those products are properly packed so that they are transferred and stored in a convenient and eco-friendly manner.
